# EUROPÄISCHE PATENTSCHRIFT

(11) **EP 1 433 994 B1**
(45) Veröffentlichungstag und Bekanntmachung des Hinweises auf die Patenterteilung: **07.06.2006**
(21) Anmeldenummer: 04000447.5
(22) Anmeldetag: 27.06.2002
(51) Int. Cl.: F16L 53/00, F01M 13/00, E03B 7/12

(54) **Heizvorrichtung zur Kurbelgehäuseentlüftung für Verbrennungskraftmaschinen und Herstellverfahren**
Heating device for blowby gas duct and method of production
Dispositif de chauffage d'un conduit de gaz de carter et procéde de construction

(43) Veröffentlichungstag der Anmeldung: 30.06.2004
(62) Teilanmeldung aus: 02014359.0
(73) Patentinhaber: DBK David + Baader GmbH, 76870 Kandel (DE)
(72) Erfinder: Beetz, Klaus, Dr., 76149 Karlsruhe (DE); Gschwind, Thomas, 67098 Bad Dürkheim (DE)
(74) Vertreter: Grünecker, Kinkeldey, Stockmair & Schwanhäusser Anwaltssozietät

(56) Entgegenhaltungen:
- EP-A- 1 213 451
- PATENT ABSTRACTS OF JAPAN vol. 1999, no. 10, 31. August 1999 (1999-08-31) & JP 11 132062 A (DENSO CORP), 18. Mai 1999 (1999-05-18)
- PATENT ABSTRACTS OF JAPAN vol. 1998, no. 10, 31. August 1998 (1998-08-31) & JP 10 121937 A (AISAN IND CO LTD), 12. Mai 1998 (1998-05-12)
- PATENT ABSTRACTS OF JAPAN vol. 2000, no. 25, 12. April 2001 (2001-04-12) & JP 2001 214995 A (PACIFIC IND CO LTD), 10. August 2001 (2001-08-10)

## Beschreibung

Die Erfindung betrifft eine Heizvorrichtung für eine Fluidleitung, insbesondere zur Kurbelgehäuseentlüftung einer Verbrennungskraftmaschine, mit einem Heizelement und mit einer Wärmesenke. Die Erfindung betrifft außerdem eine Fluidleitung, die zur Aufnahme einer solchen Heizvorrichtung ausgebildet ist sowie ein Heizmodul, das eine Heizvorrichtung der eingangs genannten Art sowie eine entsprechend ausgestaltete Fluidleitung umfasst. Die Erfindung betrifft schließlich auch ein Verfahren zur Herstellung eines solchen Heizmoduls.

Bei modernen Verbrennungskraftmaschinen sind Entlüftungen für das Kurbelgehäuse vorgesehen. Im Kurbelgehäuse einer Verbrennungskraftmaschine sind der Kurbeltrieb mit der Kurbelwelle, den Pleuelstangen und den Kolben sowie die Zylinder aufgenommen. Zylinderseitig ist das Kurbelgehäuse durch einen oder mehrere Zylinderköpfe abgedichtet. Unten ist am Kurbelgehäuse üblicherweise eine Ölwanne angeschraubt.

Im Betrieb der Verbrennungskraftmaschine füllt sich das Kurbelgehäuse bis zum Zylinderkopf mit Öldämpfen und Gasen, die an den Kolbenringen vorbei aus dem Verbrennungsraum der Zylinder entweichen. Diese Öldämpfe und Gase werden auch als Blowby-Gase bezeichnet. Durch die Pumpbewegung der Kolben werden die Blowby-Gase unter Druck gesetzt. Da die Öldämpfe und Gase im Kurbelgehäuse große Mengen an umweltschädlichen Kohlenwasserstoffen enthalten, sind Maßnahmen zu ergreifen, die ein Entweichen der Öldämpfe und Gase aus dem Kurbelgehäuse verhindern.

Zu diesem Zweck ist es bekannt, Kurbelgehäuseentlüftungen vorzusehen, die den Innenraum des Kurbelgehäuses mit den Luftansaugleitungen der Verbrennungskraftmaschine verbinden, so dass die Blowby-Gase aus dem Kurbelgehäuse zusammen mit der Frischluft angesaugt und verbrannt werden.

Wenn die Frischluft und die Blowby-Gase aus dem Kurbelgehäuse jedoch stark unterschiedliche Temperaturen aufweisen, kann es im Mischungsbereich zu Kondensationen und Ausfällungen kommen, die die Kurbelgehäuseentlüftung verstopfen.

Insbesondere bei Automotoren treten bei Kaltstarts im Winter hohe Temperaturdifferenzen zwischen der kalten Ansaugluft einerseits und dem sich mit dem Motorblock schnell aufwärmenden Blowby-Gasen aus dem Kurbelgehäuse andererseits auf, was in einigen Fällen sogar zur Vereisung oder Verstopfung der Mündung der Fluidleitung der Kurbelgehäuseentlüftung führen kann. Bei einer Verstopfung der Kurbelgehäuseentlüftung baut sich im Kurbelgehäuse ein hoher Druck auf, der das Schmieröl aus den Dichtungen an der Kurbelwelle, Ölwanne oder aus der Öffnung für den Ölmessstab drücken kann. Außerdem müssen die Kolben gegen den hohen Druck im Kurbelgehäuse vermehrt Arbeit leisten, was zu einer Verringerung des Wirkungsgrades der Verbrennungskraftmaschine führt.

Die Kondensation der Gase und das Ausfällen von Mischungsbestandteilen bei niedrigen Außentemperaturen wird im Stand der Technik durch Heizvorrichtungen in den Leitungen zur Kurbelgehäuseentlüftung vermieden. Derartige Heizvorrichtungen sind beispielsweise aus der DE-A 2432782, der US-A5970962, der US-A-6062206 und der EP-A-1164264 bekannt.

Bei der Kurbelgehäuseentlüftung der DE-A-2432782 ist die Mündungsstelle der Entlüftungsleitung am Ansaugsystem elektrisch beheizbar. Hierzu dient eine Heizvorrichtung, die aus einem metallischen Rohrstück mit auf dessen Mantelfläche koaxial angeordnetem elektrischen Heizleiter besteht. Zum Beheizen wird eine auf einem Spulenkörper befindliche Heizdrahtwicklung verwendet. Nachteilig bei der Heizvorrichtung der DE-A-2432782 ist vor allem der große Platzbedarf, der eine Verwendung bei modernen Motoren nahezu unmöglich macht. Außerdem ist die Heizvorrichtung der DE-A-2432782 schwer zu montieren und im Schadensfall schwer auszutauschen.

Bei den weiter entwickelten Heizvorrichtungen der US-A-5970962 und der US-A-6062206 wird ein PTC (Positive Temperature Coefficient) Heizelement anstelle eines Heizdrahtes verwendet. Das Heizelement ist wärmeleitend mit einer die Mündung der Kurbelgehäuseentlüftung umgebenden Wärmesenke verbunden. Die Wärmesenke und das Heizelement sind in einem Stopfen integriert, der gleichzeitig die Mündung der Kurbelgehäuseentlüftung bildet. Zwar ist der Platzbedarf bei den Vorrichtungen der US-A-5970962 und der US-A-6062206 geringer als bei der Heizvorrichtung der DE-A-2432782, doch ist deren aufwendige Herstellung sowie deren schlechte Zugänglichkeit an der Verbrennungskraftmaschine zu Wartungszwecken nachteilig.

In der EP-A-1164264 werden die PTC-Elemente mittels eines elektrisch nicht leitfähigen Silikonklebers an der Fluidleitung für die Kurbelgehäuseentlüftung aufgeklebt und nach der Montage kunststoffumspritzt. Dadurch wird eine kompakte Bauform unabhängig von der Ausgestaltung der Fluidleitung erreicht. Allerdings ist die Heizvorrichtung der EP-A-1164264 hinsichtlich ihrer Wartungsfreundlichkeit verbesserungsfähig.

Ferner ist in der EP-A-1213451 ein Membranventil zur Kugelgehäuseentlüftung beschrieben, das eine Heizvorrichtung mit einem Heizelement in einer Wärmesenke zur Erwärmung einer Membranventilfeder aufweist. In der JP-A-11132062 ist eine Hülse in einer Ansaugleitung eines Verbrennungsmotors beschrieben, die Wärme an die Ansaugluft abgibt.

In Anbetracht der Nachteile der aus dem Stand der Technik bekannten Heizvorrichtungen liegt der Erfindung daher die Aufgabe zugrunde, eine Heizvorrichtung für Fluidleitungen, insbesondere für Kurbelgehäuseentlüftungen von Verbrennungskraftmaschinen, zu verbessern. Insbesondere soll sie bei einer kompakten Bauweise wartungsfreundlicher und leicht zu montieren sein.

Diese Aufgabe wird für eine Heizvorrichtung der eingangs genannten Art dadurch gelöst, dass die Heizvorrichtung in einen sich in radialer Richtung öffnenden Schacht der Fluidleitung einsetzbar ausgestaltet ist, und dass die Wärmesenke als ein durchströmbares, im Bereich des Schachtes anordenbares Leitungsstück ausgebildet ist.

Diese Lösung ist konstruktiv einfach. Der Wärmeübergang vom Heizelement zu dem in der Fluidleitung strömenden Gas ist dadurch verbessert, dass eine Wärmesenke vorgesehen ist, die an den Innenraum der Fluidleitung grenzt. Die Wärmesenke kann dabei aus einem stark wärmeleitenden Werkstoff, wie einem Metall, insbesondere Aluminium, Kupfer oder eine Aluminium- oder Kupfer-Legierung gefertigt sein. Durch die Angrenzung an den Innenraum der Fluidleitung wird der Wärmeübergang verbessert.

Um möglichst den gesamten Strömungsquerschnitt der Fluidleitung beheizen zu können, ist die Wärmesenke als ein durchströmtes Leitungsstück ausgebildet sein, das vorzugsweise in den Schacht der Fluidleitung einlegbar ausgestaltet ist. Dabei kann der Strömungsquerschnitt in Form und Größe vorzugsweise der Form und der Größe des Strömungsquerschnitts der Fluidleitung entsprechen, so dass die Fluidleitung und das Leitungsstück ohne große Strömungsverluste durchströmt werden.

Gemäß einer Ausgestaltung können das Heizelement und die Haltevorrichtung zu einer Moduleinheit vormontiert sein, die in einen sich in radialer Richtung erstreckenden Aufnahmeschacht der Fluidleitung einstückig einsetzbar ausgestaltet ist. Dadurch wird die Montage der Heizvorrichtung erleichtert, da diese als eine einstückige Moduleinheit gehandhabt wird. Auf diese Weise kann die Heizvorrichtung auch dann montiert werden, wenn die Verbrennungskraftmaschine bereits an ihrem Einsatzort, beispielsweise in einem Automobil, angebracht ist.

Zur Aufnahme des Heizelements kann die Halteeinrichtung in einer weiteren Ausgestaltung einen Sockel aufweisen, der eine zur Fluidleitung hin offene Ausnehmung aufweist, in der das Heizelement aufgenommen ist. Die Ausnehmung sichert das Heizelement gegen ein unabsichtliches Verschieben bei der Montage, so dass die Fehleranfälligkeit des Montagevorganges verringert wird. Da sich die Ausnehmung zur Fluidleitung hin öffnet, so dass das Heizelement an der Fluidleitung anliegen kann, ist ein guter Wärmeübergang vom Heizelement zur Fluidleitung möglich.

Der Wärmeübergang kann vorteilhaft auch dadurch verbessert werden, dass die Moduleinheit ein Federelement umfasst, durch das das Heizelement in Richtung der Fluidleitung gedrückt ist. Durch die Federkraft wird im eingesetzten Zustand der Moduleinheit das Heizelement an die Fluidleitung gedrückt, so dass durch die Kontaktfläche ein guter Wärmeübergang vom Heizelement zur Fluidleitung bzw. zu dem in der Fluidleitung strömenden Fluid gewährleistet ist. Der Wärmeübergang kann weiter verbessert werden, wenn die Berührungsfläche so groß wie möglich ausgestaltet ist und das Heizelement möglichst ganzflächig an der Fluidleitung anliegt.

Um ein Entweichen der Blowby-Gase aus dem Kurbelgehäuse über die Heizvorrichtung zu verhindern, kann in einer weiteren vorteilhaften Ausgestaltung die Moduleinheit eine Dichtfläche aufweisen, die dichtend mit einer entsprechenden Dichtfläche der Fluidleitung in Verbindung bringbar ist. Wenn die Dichtfläche dabei in einer Weiterbildung aus einem verschweißbaren Werkstoff gefertigt ist, kann die Moduleinheit durch Verschweißen, beispielsweise Reibverschweißen, insbesondere durch Ultraschall, an der Fluidleitung befestigt werden.

Alternativ kann die Moduleinheit auch wiederholt lösbar an der Fluidleitung anbringbar ausgestaltet sein, beispielsweise durch Verschrauben, Verklemmen oder Verrasten. Auch können an der Dichtfläche zusätzliche Dichtelemente, wie beispielsweise O-Ringe, angebracht sein, durch die auf eine aufwändige Endbearbeitung der Dichtfläche verzichtet werden kann.

Eine kompakte Bauweise kann insbesondere durch die Verwendung eines PTC-Heizelements (Positive Temperature Coefficient) erreicht werden.

Ein solches PTC-Heizelement kann zwischen zwei elektrisch leitenden Kontaktplatten angeordnet sein. Alternativ kann auch eine der Kontaktplatten wegfallen und durch eine elektrisch leitende Wärmesenke ersetzt sein. Außerdem kann in einer Weiterbildung eine der Kontaktplatten als Federelement ausgestaltet sein, durch das das Heizelement in Richtung der Fluidleitung gedrückt ist.

Auf aufwendige zusätzliche Leitungen zur Energieversorgung des Heizelements in der Moduleinheit kann verzichtet werden, wenn die Kontaktplatten sich in Kontaktabschnitten oder Kontaktfahnen fortsetzen und bis zu einem Steckverbinderabschnitt erstrecken. Auf diese Weise sind die Leitungen einstückig von den Kontaktplatten ausgeformt.

Die Anzahl der zu verwendenden Bauelemente und damit die Kosten zur Herstellung der Moduleinheit können verringert werden, wenn die Halteeinrichtung im Wesentlichen einstückig einen Steckverbinderabschnitt ausbildet, der mit einem Steckverbinder zur Energieversorgung des Heizelements verbindbar ist. Ist die Halteeinrichtung dabei in einer weiteren vorteilhaften Ausgestaltung aus einem elektrisch isolierenden Werkstoff, beispielsweise einem Kunststoff, gefertigt, so kann auf eine aufwendige Isolierung der Versorgungsleitungen zwischen Steckverbinder und Heizelement verzichtet werden. Kostengünstig kann die Halteeinrichtung als ein Spritzgussteil gefertigt sein.

Die Energieversorgungsleitungen zwischen dem Steckverbinderabschnitt und dem Heizelement können in der Halteeinrichtung vergossen oder eingespritzt sein oder aber in vorbereitete Aufnahmeabschnitte der Halteeinrichtung eingelegt sein. Um bei eingelegten Energieversorgungsleitungen eine Abdichtung des Steckverbindungsabschnittes gegenüber dem Innenraum der Fluidleitung zu erhalten, kann der Steckverbindungsabschnitt gegenüber dem Heizelement abgedichtet sein.

Zur Aufnahme der Heizvorrichtung kann erfindungsgemäß eine speziell ausgebildete Fluidleitung vorgesehen sein, die insbesondere zur Kurbelgehäuseentlüftung einer Verbrennungskraftmaschine geeignet ist und einen von einer Außenwand umgebenen Innenraum umfasst. Die Fluidleitung kann insbesondere als ein Leitungsstück ausgebildet sein, das in bereits vorhandene Leitungen einsetzbar ausgestaltet ist.

Zur Aufnahme der Heizvorrichtung kann die Fluidleitung einen sich radial erstreckenden Schacht aufweisen, in dem das Heizelement vorzugsweise zusammen mit der Halteeinrichtung aufnehmbar ist.

Um ein als Wärmesenke ausgestaltete Wand- oder Leitungsstück unabhängig vom Material der Fluidleitung verwenden zu können, kann die Fluidleitung einen Schacht aufweisen, der sich bis in den Innenraum der Fluidleitung erstreckt. In einen solchen Schacht kann eine Wärmesenke eingesetzt werden, die entweder einen Teil des Strömungsquerschnittes der Fluidleitung begrenzt oder aber einen Abschnitt der Fluidleitung als separates Leitungsstück bildet.

Um eine möglichst kompakte Bauweise zu erzielen, kann der Schacht in seiner äußeren Breite in etwa dem Außendurchmesser der Fluidleitung entsprechen und nicht über den Außendurchmesser der Fluidleitung ragen. Die Schachtwände können sich von einer Mittenebene der Fluidleitung im Wesentlichen radiusparallel erstrecken. Diese Ausgestaltung erlaubt die Verwendung der Heizvorrichtung auch in den beengten Raumverhältnissen modemer Automobilmotoren.

Ferner kann in einer vorteilhaften Ausgestaltung die Fluidleitung eine Dichtfläche aufweisen, die mit einer entsprechenden Dichtfläche der Halteeinrichtung zusammenwirkt und den Schacht gegen ein Entweichen von Blowby-Gasen aus dem Innenraum der Fluidleitung abdichtet. Dabei kann die Dichtfläche insbesondere an einem dem Schacht umgebenden Kragen ausgebildet sein.

Wenigstens die Dichtfläche oder vorzugsweise die gesamte Fluidleitung können aus einem verschweißbaren Werkstoff, beispielsweise einem Kunststoff, gefertigt sein, so dass die Heizvorrichtung und die Fluidleitung miteinander verschweißt, beispielsweise mit Ultraschall reibverschweißt, werden können.

Die Fluidleitung, das Heizelement und die Halteeinrichtung können auch als Heizmodul kombiniert sein, wobei das Heizelement erfindungsgemäß in den sich radial öffnenden Schacht der Fluidleitung eingesetzt ist.

In dem Schacht kann ferner eine an den Innenraum der Fluidleitung grenzende Wärmesenke eingesetzt sein, die mit dem Heizelement in Berührung steht, so dass ein guter Wärmeübergang erzielt wird. Insbesondere kann das Heizelement durch Federkraft an die Wärmesenke gedrückt sein.

Die Halteeinrichtung kann mit der Fluidleitung stoffschlüssig durch beispielsweise Kleben oder Verschweißen verbunden sein. Insbesondere bei der Verwendung von Kunststoffen sowohl fluidleitungsseitig als auch halteeinrichtungsseitig kann die Verbindung zwischen der Halteeinrichtung und der Fluidleitung durch Ultraschallverschweißen erzeugt werden.

Im folgenden werden der Aufbau und die Funktion der Erfindung anhand einer Ausführungsform mit Bezug auf die Zeichnungen beispielhaft erläutert.

Es zeigen:
- Fig. 1: ein erfindungsgemäßes Heizmodul in einer Explosionsdarstellung;
- Fig. 2.: das Heizmodul der Fig. 1 im zusammengebauten Zustand in einer Seitenansicht;
- Fig. 3.: das Heizmodul der Fig. 2 in einer Draufsicht entlang des Pfeiles III der Fig. 2;
- Fig. 4: das Heizmodul der Fig. 2 in einem Schnitt entlang der Ebene IV-IV der Fig. 2;
- Fig. 5: das Heizmodul der Fig. 2 in einem Schnitt entlang der Ebene V-V der Fig. 2;
- Fig. 6: das Heizmodul der Fig. 2 in einem Schnitt entlang der Ebene VI-VI der Fig. 4.

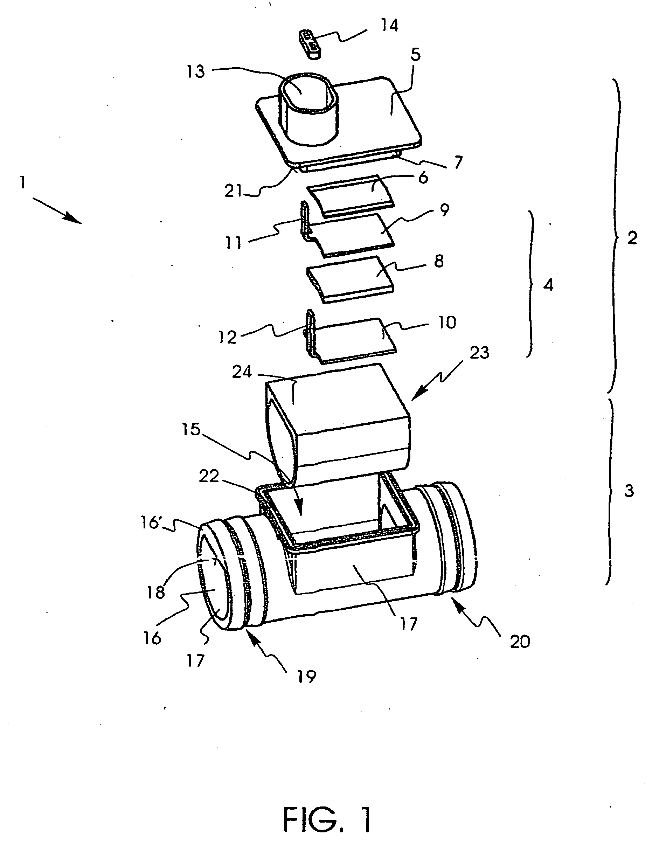

Fig. 1 zeigt ein erfindungsgemäßes Heizmodul 1 in einer Ansicht, in der in einer Montagerichtung M die Bauelemente des Heizmoduls 1 explosionsartig übereinander gezeichnet sind.

Das Heizmodul 1 weist eine Heizvorrichtung 2 sowie eine im Wesentlichen rohrförmige Fluidleitung 3 auf. Die Montagerichtung M verläuft im Wesentlichen radial zur Fluidleitung 3.

Die Heizvorrichtung 2 umfasst ein Heizelement 4 und eine Halteeinrichtung 5. Durch die Halteeinrichtung 5 ist das Heizelement 4 an der Fluidleitung 3 befestigbar. Ferner kann, wie beim Ausführungsbeispiel der Fig. 1, die Heizvorrichtung 2 ein Federelement 6 umfassen, durch das das Heizelement 4 in Richtung der Fluidleitung 3 gedrückt wird. Das Federelement 6 kann zwischen dem Heizelement 4 und der Halteeinrichtung 5 und in einem Sockel 7 der Halteeinrichtung aufgenommen sein.

Das Heizelement 4 umfasst ein PTC-Heizelement 8, das zwischen zwei Kontaktplatten 9, 10 angeordnet ist. Die Kontaktplatten 9, 10 sind elektrisch leitend und setzen sich jeweils in einen Kontaktabschnitt 11, 12 fort, der als eine rechtwinklig gegenüber der Platte abgewinkelte Kontaktfahne ausgestaltet ist.

Die Kontaktfahnen 11, 12 sind so ausgestaltet, dass sie sich bis zu einem Steckverbinderabschnitt 13 der Halteeinrichtung 5 erstrecken können, wenn das Heizelement 4 in der Halteeinrichtung 5 eingelegt ist. Der Steckverbinderabschnitt 13 kann, wie in der Fig. 1 gezeigt ist, einstückig an der Halteeinrichtung 5 ausgebildet sein. Hierzu ist die Halteeinrichtung 5 aus einem Kunststoff durch Spritzgießen hergestellt.

Um die Kontaktfahnen 11, 12 im Steckverbinderabschnitt 13 kann ein Dichtelement 14 gelegt sein.

Die Fluidleitung 3 weist einen sich radial öffnenden Schacht 15 auf, in dem die Halteeinrichtung 5 und das Heizelement 4 aufnehmbar sind. Der Schacht 15 erstreckt sich bis zu einem Innenraum 16 der Fluidleitung 3, durch den das Fluid geleitet ist und der durch eine Außenwand 16' begrenzt ist. Der Schacht 15 weist einen Kragen 17 bildende Schachtwände auf, die sich radiusparallel vom Durchmesser der Fluidleitung 3 weg erstrecken.

In Öffnungsrichtung des Schachtes 15 ist der Innenraum 16 der Fluidleitung 3 von einem ebenen Wandabschnitt 18 begrenzt.

An den beiden in Längs- bzw. Durchstömungsrichtung gelegenen Enden der Fluidleitung sind Verbindungsabschnitte 19, 20 vorgesehen, mit denen die Fluidleitung 3 an einer Verbrennungskraftmaschine (nicht gezeigt) befestigt werden kann.

Die Heizvorrichtung 2 und das Heizelement 4 können als eine Moduleinheit vormontiert sein, die in den Schacht 15 einsetzbar ausgestaltet ist.

Die Halteeinrichtung 5 weist eine Dichtfläche 21 auf, die mit einer entsprechenden fluidleitungsseitigen Dichtfläche 22 am Kragen 17 zusammenwirkt, so dass durch den Schacht 15 bei montierter Heizvorrichtung 2 kein Fluid aus dem Innenraum 16 entweichen kann.

Eine als ein Leitungsstück 23 ausgebildete Wärmesenke, die sowohl Teil der Fluidleitung 3 als auch Teil der Heizvorrichtung 2 sein kann, ist so ausgestaltet, dass sie in den Schacht 15 einlegbar ist und den Strömungsquerschnitt der Fluidleitung 3 im Bereich des Schachtes 15 umgibt. Die Wärmesenke weist an ihrem dem Heizelement 4 zugewandten Abschnitt eine im Wesentlichen plane Fläche 24 auf. Die Wärmesenke 23 ist aus einem wärmeleitenden Werkstoff, wie beispielsweise Aluminium, Kupfer oder Aluminium- oder Kupferlegierungen gefertigt.

Anstelle der in Fig. 1 dargestellten, als Leitungsstück ausgebildeten Wärmesenke 23 kann die Wärmesenke 23 auch lediglich einen Wandabschnitt bilden, der an den Innenraum 16 der Fluidleitung 3 grenzt. Hierzu kann die Wärmesenke beispielsweise plattenförmig ausgestaltet sein und lediglich die planen Flächen 24 und 18 ausbilden.

Die Wärmesenke 23 kann mit der Heizvorrichtung 2 form- oder stoffschlüssig zu einer Moduleinheit verbunden sein, oder aber vor dem Anbringen des Heizelements 4 in die Fluidleitung 3 eingesetzt sein.

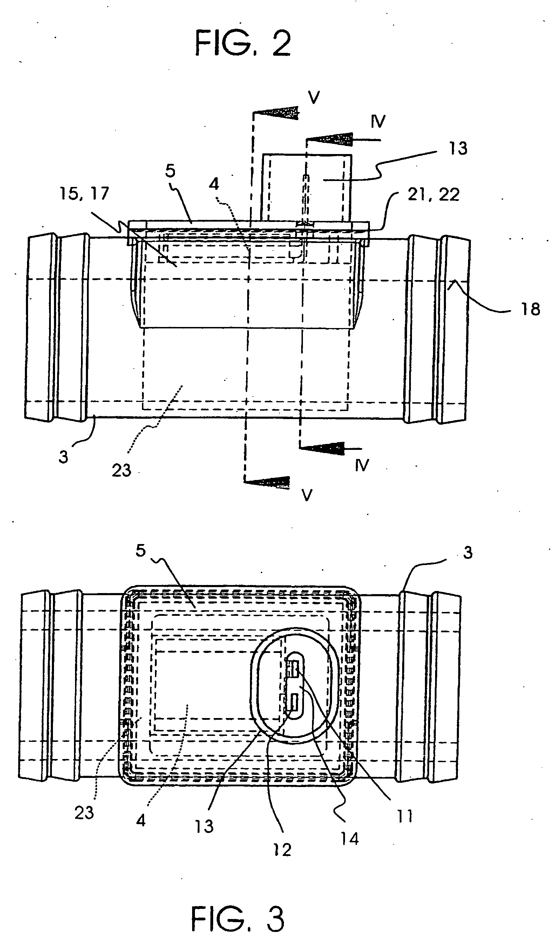

In Fig. 2 ist eine Seitenansicht des Heizmoduls 1 im zusammengesetzten Zustand, das heißt mit an der Fluidleitung 3 befestigter Halteeinrichtung 5, mit in den Schacht 15 eingelegtem Heizelement 4 und mit in dem Schacht 15 eingelegter Wärmesenke 23. Die nicht sichtbaren Elemente sind in der Seitenansicht der Fig. 2 durch gestrichelte Linien dargestellt.

In der Fig. 2 ist zu erkennen, dass sich der Schacht 15 in radialer Richtung nur in etwa bis zum Außendurchmesser der rohrförmigen Fluidleitung 3 erstreckt und nicht über die Kontur der Fluidleitung ragt. Allein der Steckverbindungsabschnitt 13 erstreckt sich in radialer Richtung weg von der Fluidleitung 3, so dass das Heizmodul auch bei beengten Einbauverhältnissen verwendet werden kann.

Die Halteeinrichtung 5 und die Fluidleitung 3 liegen im Bereich der Dichtflächen 21, 22 dichtend aufeinander und sind entlang der Dichtflächen 21, 22 miteinander verschweißt, vorzugsweise durch Ultraschall.

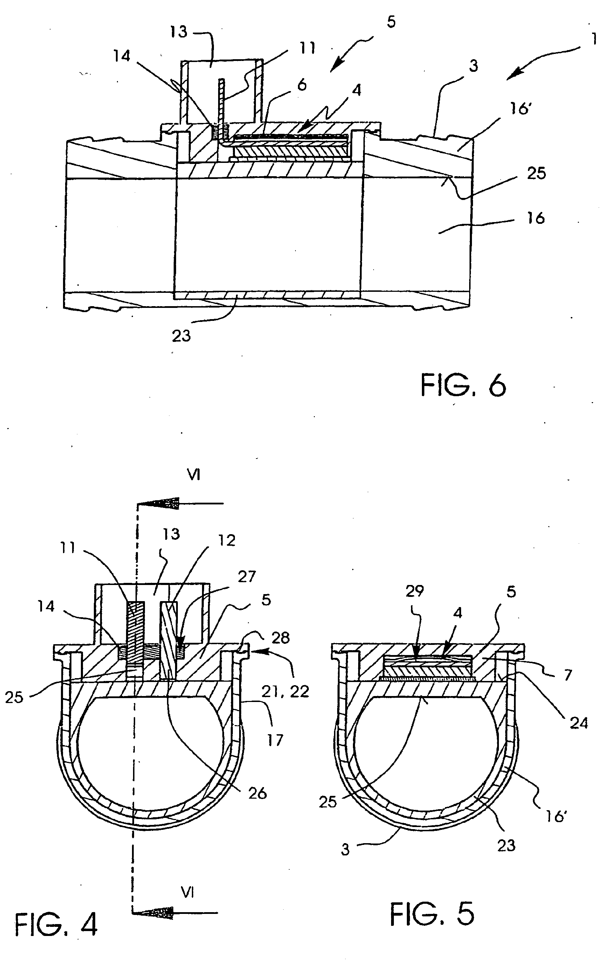

In Fig. 3 ist zu erkennen, dass die Breite des Schachtes quer zur Längserstreckung der Fluidleitung 3 in etwa dem Außendurchmesser der Fluidleitung 3 entspricht, so dass auch in dieser Richtung der Schacht 15 nicht über die Kontur der Fluidleitung ragt. Der Kragen 17 des Schachtes 15 erstreckt sich dabei radiusparallel vom Durchmesser der Fluidleitung 3 nach oben.

In den Fig. 4 und 5 sind Radialschnitte in den Ebenen IV-IV (Fig. 4) und V-V (Fig. 5) jeweils der Fig. 2 gezeigt. Die Ebene IV-IV liegt dabei im Bereich der Kontaktfahnen 11, 12 der Kontaktplatten 9, 10.

Wie in Fig. 4 zu erkennen ist, erstrecken sich die Kontaktfahnen 11, 12 durch jeweils eine Öffnung 25, 26 im Sockel 7 der Halteeinrichtung 4 zum Steckverbindungsabschnitt 13. Die Öffnungen 25, 26 enden an der dem Steckverbindungsabschnitt 13 zugewandeten Ende in einer Ausnehmung 27, die sich quer über beide Öffnungen 25, 26 erstreckt. In die Ausnehmung 27 ist das Dichtelement 14 eingelegt, so dass die Öffnungen 25, 26 abgedichtet sind.

Wie in Fig. 4 weiter zu erkennen ist, sind die Kontaktfahnen 11, 12 in den Öffnungen 25, 26 nicht isoliert, da die Halteeinrichtung 4 wenigstens in dem Bereich, in dem die elektrischen Leitungen zwischen dem Heizelement 4 und dem Steckverbindungsabschnitt 13 verlaufen, aus einem elektrisch isolierenden Material gefertigt ist. Im Steckverbinderabschnitt 13 liegen die Kontaktfahnen 11, 12 frei und können durch einen Stecker zur Versorgung des Heizelements 4 mit elektrischer Energie kontaktiert werden.

Die Dichtflächen 21, 22 können mit ineinandergreifenden Führungselementen 28 versehen sein, durch die die Position der Halteeinrichtung 4 am Kragen 17 weitgehend unverschieblich festgelegt wird, so dass die Halteeinrichtung 4 bei der Montage nicht verrutschen kann. Gleichzeitig dienen die Führungselemente 28 bei einer Ultraschallverschweißung zu einer Konzentration der Körperschwingungen, so dass eine sichere Verschweißung in diesem Bereich möglich ist.

Der Schnitt entlang der Ebene V-V der Fig. 5 geht durch das Heizelement 4. Wie in Fig. 5 zu erkennen ist, ist das Heizelement 4 in einer Ausnehmung 29 im Sockel 7 der Halteeinrichtung 5 aufgenommen.

Die dem Innenraum 16 der Fluidleitung 3 zugewandte Kontaktplatte 10 des Heizelements 4 liegt flächig am planen Abschnitt 24 der in die Fluidleitung 3 eingelegten Wärmesenke 23 auf, die von der Außenwand 16' der Fluidleitung umgeben ist. Durch das Federelement 6 wird eine möglichst vollflächige Berührung erzeugt.

Alternativ zu der gezeigten Ausführungsform kann die vom Innenraum 16 der Fluidleitung 3 abgewandte Kontaktplatte 9 gleichzeitig als Federelement dienen. Bei einer elektrisch leitenden Wärmesenke 23 kann außerdem auf die Kontaktplatte 10 verzichtet werden und eine elektrische Leitung über die Wärmesenke 23 hergestellt werden.

Durch die dem Heizelement zugewandte plane Fläche 24 der Wärmesenke und durch die plane Begrenzung 25 des Innenraums 16 an der dem Heizelement zugewandten Seite wird eine gute Wärmeübertragung vom Heizelement 4 in den Innenraum 16 der Fluidleitung 3 gewährleistet.

In Fig. 6 ist ein Schnitt entlang der Ebene VI-VI der Fig. 4, die außermittig durch die Kontaktfahne 11 verläuft, gezeigt.

In der Fig. 6 ist zu erkennen, dass sich der Innenraum 16 der Fluidleitung 3 im Bereich der Wärmesenke 23 im Wesentlichen stoßfrei fortsetzt, so dass nur geringe oder gar keine Strömungsverluste beim Durchströmen eines Fluids durch die Fluidleitung 3 entstehen und sich auch keine Ablagerungen in Rezirkulationsgebieten bilden können.

Die in den Fig. 1 bis 6 dargestellte Ausführungsform ist besonders geeignet zur Beheizung Blowby-Gasen, die in Leitungen für die Kurbelgehäuseentlüftung von Verbrennungskraftmaschinen, insbesondere bei Automobilen, eingesetzt werden.

## Patentansprüche

1. Heizvorrichtung (2) für eine Fluidleitung (3), insbesondere zur Kurbelgehäuseentlüftung einer Verbrennungskraftmaschine, mit einem Heizelement (4) und mit einer Wärmesenke (23), **dadurch gekennzeichnet, dass** die Heizvorrichtung in einen sich in radialer Richtung öffnenden Schacht (15) der Fluidleitung (3) einsetzbar ausgestaltet ist, und dass die Wärmesenke (23) als ein durchströmbares, im Bereich des Schachtes (15) anordenbares Leitungsstück ausgebildet ist.

2. Heizvorrichtung (2) nach Anspruch 1, **dadurch gekennzeichnet, dass** das Heizelement (4) mitsamt einer Halteeinrichtung (5) zu einer Moduleinheit vormontiert ist.

3. Heizvorrichtung (2) nach Anspruch 1 oder 2, **dadurch gekennzeichnet, dass** an der Heizvorrichtung (2) eine Dichtfläche (21) vorgesehen ist, die dichtend mit der Fluidleitung (3) in Verbindung bringbar ist.

4. Heizvorrichtung (2) nach einem der oben genannten Ansprüche, **dadurch gekennzeichnet, dass** das Heizelement (4) ein PTC-Heizelement (8) umfasst.

5. Heizvorrichtung (2) nach Anspruch 4, **dadurch gekennzeichnet, dass** wenigstens eine Kontaktplatte (9, 10) vorgesehen ist, die am PTC-Heizelement (8) anliegt und sich in einem Kontaktabschnitt (11, 12) bis zu einem Steckverbinderabschnitt (13) einteilig fortsetzt.

6. Heizvorrichtung (2) nach Anspruch 4 oder 5, **dadurch gekennzeichnet, dass** wenigstens eine der Kontaktplatten (9, 10) als Federelement ausgestaltet ist.

7. Heizvorrichtung (2) nach einem der oben genannten Ansprüche, **dadurch gekennzeichnet, dass** die Halteeinrichtung (5) im Wesentlichen einstückig einen Steckverbinderabschnitt (13) ausbildet, der mit einem Steckverbinder zur Energieversorgung des Heizelements (4) verbindbar ist.

8. Heizvorrichtung (2) nach Anspruch 7, **dadurch gekennzeichnet, dass** der Steckverbinderabschnitt (13) gegenüber dem Heizelement (4) abgedichtet ist.

9. Bausatz, umfassend eine Heizvorrichtung (2) und eine Fluidleitung (3), **dadurch gekennzeichnet, dass** die Heizvorrichtung (2) nach einem der oben genannten Ansprüche ausgestaltet ist.

10. Fluidleitung (3), insbesondere zur Kurbelgehäuseentlüftung einer Verbrennungskraftmaschine, mit einem von einer Außenwand umgebenen Innenraum (16), **dadurch gekennzeichnet, dass** die Außenwand einen sich in radialer Richtung nach außen öffnenden Schacht aufweist, in dem eine Heizvorrichtung (2) nach einem der Ansprüche 1 bis 9 aufnehmbar ist, und dass im Bereich des Schachtes (15) eine als Leitungsstück ausgebildete, an den Innenraum (16) angrenzende Wärmesenke vorgesehen ist.

11. Fluidleitung (3) nach Anspruch 10, **dadurch gekennzeichnet, dass** der Schacht (15) von einer Dichtfläche (15) umgeben ist.

12. Fluidleitung (3) nach Anspruch 10 oder 11, **dadurch gekennzeichnet, dass** die Dichtfläche an einem den Schacht (1) umgebenden Kragen (17) ausgebildet ist.

13. Fluidleitung (3) nach einem der Ansprüche 10 bis 12, **dadurch gekennzeichnet, dass** die Fluidleitung (3) aus einem Kunststoff gefertigt ist.

14. Fluidleitung (3) nach einem der Ansprüche 10 bis 13, **dadurch gekennzeichnet, dass** der Innenraum (16) der Fluidleitung (3) in Öffnungsrichtung des Schachtes (15) wenigstens abschnittsweise ein im Wesentlichen plane Begrenzungsfläche (18) aufweist.

15. Fluidleitung (3) nach einem der Ansprüche 10 bis 14, **dadurch gekennzeichnet, dass** sich der Schacht (15) bis in den Innenraum (16) der Fluidleitung (3) erstreckt.

16. Bausatz, umfassend eine Heizvorrichtung (2) und eine Fluidleitung (3), **dadurch gekennzeichnet, dass** die Fluidleitung (3) nach einem der Ansprüche 10 bis 15 ausgestaltet ist.

17. Heizmodul (1), insbesondere zur Kurbelgehäuseentlüftung einer Verbrennungskraftmaschine, mit einer Fluidleitung (3), einer Wärmesenke und einem Heizelement (4), **dadurch gekennzeichnet, dass** die Fluidleitung (3) nach einem der Ansprüche 10 bis 15 ausgestaltet ist und einen in radialer Richtung sich nach außen öffnenden Schacht (15) aufweist, in dem das Heizelement (4) eingesetzt ist, und dass die Wärmesenke als ein in die Fluidleitung eingesetztes Leitungsstück ausgebildet und im Bereich des Schachtes angeordnet ist.

18. Verfahren zum Herstellen eines Heizmoduls (1), insbesondere zur Kurbelgehäuseentlüftung einer Verbrennungskraftmaschine, umfassend folgende Schritte:
- Einsetzen einer Heizvorrichtung mit einem Heizelement in einen sich nach außen öffnenden Schacht einer Fluidleitung;
- Anordnen einer als Leitungsstück ausgebildeten Wärmesenke in der Fluidleitung im Bereich des Schachtes;

19. Verfahren nach Anspruch 18, umfassend folgenden Verfahrensschritt:
- Vormontieren eines PCT-Heizelements und Kontaktplatten zu einer als Moduleinheit ausgestalteten Heizvorrichtung vor deren Einsetzen in den Schacht

## Claims

1. Heating device (2) for a fluid line (3), in particular for the blowby gas venting of an internal combustion engine, comprising a heating element (4) and a heat sink (23), **characterised in that** the heating device is formed to be insertable in a shaft (15), opening in the radial direction, of the fluid line (3), and **in that** the heat sink (23) is formed as a duct member through which a fluid may flow and which is disposable in the region of the shaft (15).

2. Heating device (2) according to claim 1, **characterised in that** the heating element (4) is pre-assembled together with a holding device (5) to form a modular unit.

3. Heating device (2) according to claim 1 or 2, **characterised in that** a sealing face (21) is provided on the heating device (2) and may be brought into sealing-tight communication with the fluid line (3).

4. Heating device (2) according to one of the preceding claims, **characterised in that** the heating element (4) is a PTC heating element (8).

5. Heating device (2) according to claim 4, **characterised in that** at least one contact plate (9, 10) is provided, which abuts the PTC heating element (8) and is continued in one piece in a contact section (11, 12) up to a plug-and-socket connector section (13).

6. Heating device (2) according to claim 4 or 5, **characterised in that** at least one of the contact plates (9, 10) is formed as a spring element.

7. Heating device (2) according to one of the preceding claims, **characterised in that** the holding device (5) forms substantially integrally a plug-and-socket connector section (13), which may be connected to a plug-and-socket connector for supplying power to the heating element (4).

8. Heating device (2) according to claim 7, **characterised in that** the plug-and-socket connector section (13) is sealed with respect to the heating element (4).

9. Kit, comprising a heating device (2) and a fluid line (3), **characterised in that** the heating device (2) is formed according to one of the preceding claims.

10. Fluid line (3), in particular for the blowby gas venting of an internal combustion engine, comprising an interior (16) surrounded by an outer wall, **characterised in that** the outer wall has a shaft opening to the exterior in the radial direction, in which shaft a heating device (2) according to one of claims 1 to 9 may be received, and **in that** in the region of the shaft (15) a heat sink formed as a duct member and abutting the interior (16) is provided.

11. Fluid line (3) according to claim 10, **characterised in that** the shaft (15) is surrounded by a sealing face (15).

12. Fluid line (3) according to claim 10 or 11, **characterised in that** the sealing face is formed on a collar (17) surrounding the shaft (15).

13. Fluid line (3) according to one of claims 10 to 12, **characterised in that** the fluid line (3) is manufactured from a plastics material.

14. Fluid line (3) according to one of claims 10 to 13, **characterised in that** the interior (16) of the fluid line (3) has in the opening direction of the shaft (15) a substantially plane border face (18) at least in parts.

15. Fluid line (3) according to one of claims 10 to 14, **characterised in that** the shaft (15) extends into the interior (16) of the fluid line (3).

16. Kit, comprising a heating device (2) and a fluid line (3), **characterised in that** the fluid line (3) is formed according to one of claims 10 to 15.

17. Heating unit (1), in particular for the blowby gas duct of an internal combustion engine, comprising a fluid line (3), a heat sink and a heating element (4), **characterised in that** the fluid line (3) is formed according to one of claims 10 to 15 and has a shaft (15) which opens outwards in the radial direction and in which the heating element (4) is inserted, and **in that** the heat sink is formed as a duct member inserted into the fluid line and is disposed in the region of the shaft.

18. Method of manufacturing a heating unit (1), in particular for the blowby gas duct of an internal combustion engine, comprising the following steps:
- insertion of a heating device with a heating element into a shaft, opening outwards, of a fluid line;
- mounting of a heat sink in the form of a duct member in the fluid line in the region of the shaft.

19. Method according to claim 18, comprising the following step:
- pre-assembly of a PTC heating element and contact plates to form a heating device formed as a modular unit before insertion of the same into the shaft.

## Revendications

1. Dispositif de chauffage (2) d'une conduite de fluide (3), notamment pour le dégazage du carter d'un moteur à combustion interne, comportant un élément de chauffage (4) et un dissipateur thermique (23), **caractérisé en ce que** le dispositif de chauffage est formé de façon à pouvoir être placé dans un puits (15) de la conduite de fluide (3) s'ouvrant dans la direction radiale, et **en ce que** le dissipateur thermique (23) est formé comme élément conducteur pouvant être traversé et pouvant être agencé dans la zone du puits (15).

2. Dispositif de chauffage (2) selon la revendication 1, **caractérisé en ce que** l'élément de chauffage (4) est préassemblé avec une installation de fixation (5) en une unité de module.

3. Dispositif de chauffage (2) selon la revendication 1 ou 2, **caractérisé en ce que** sur le dispositif de chauffage (2) est prévue une surface d'étanchéité (21) qui peut être mise en liaison de façon étanche avec la conduite de fluide (3).

4. Dispositif de chauffage (2) selon l'une quelconque des revendications précédentes, **caractérisé en ce que** l'élément de chauffage (4) comprend un élément de chauffage à coefficient positif de température (8).

5. Dispositif de chauffage (2) selon la revendication 4, **caractérisé en ce qu'**on prévoit au moins une plaque de contact (9, 10) qui est placée contre l'élément de chauffage à coefficient positif de température (8) et se poursuit d'un seul tenant dans un segment de contact (11, 12) jusqu'à un segment de connecteur à fiches (13).

6. Dispositif de chauffage (2) selon la revendication 4 ou 5, **caractérisé en ce qu'**au moins l'une des plaques de contact (9, 10) est formée comme élément à ressort.

7. Dispositif de chauffage (2) selon l'une quelconque des revendications précédentes, **caractérisé en ce que** l'installation de maintien (5) forme un segment de connecteur à fiches (13) sensiblement d'un seul tenant qui peut être raccordé à un connecteur à fiches pour l'alimentation en énergie de l'élément de chauffage (4).

8. Dispositif de chauffage (2) selon la revendication 7 **caractérisé en ce que** le segment de connecteur à fiches (13) est rendu étanche par rapport à l'élément de chauffage (4).

9. Ensemble, comprenant un dispositif de chauffage (2) et une conduite de fluide (3), **caractérisé en ce que** le dispositif de chauffage (2) est formé selon l'une quelconque des revendications précédentes.

10. Conduite de fluide (3), notamment pour le dégazage du carter d'un moteur à combustion interne, comportant une paroi extérieure entourant un espace intérieur(16), **caractérisée en ce que** la paroi extérieure présente un puits s'ouvrant vers l'extérieur dans une direction radiale, dans lequel un dispositif de chauffage (2) peut être logé selon l'une quelconque des revendications 1 à 9, et **en ce que** dans la zone du puits (15) on prévoit un dissipateur thermique formé comme élément conducteur et adjacent à l'espace intérieur (16).

11. Conduite de fluide (3) selon la revendication 10, **caractérisée en ce que** le puits (15) est entouré par une surface d'étanchéité (15).

12. Conduite de fluide (3) selon la revendication 10 ou 11, **caractérisée en ce que** la surface d'étanchéité est formée sur un collet (17) entourant le puits (1).

13. Conduite de fluide (3) selon l'une quelconque des revendications 10 à 12, **caractérisée en ce que** la conduite de fluide (3) est fabriquée à partir d'une matière plastique.

14. Conduite de fluide (3) selon l'une quelconque des revendications 10 à 13, **caractérisée en ce que** l'espace intérieur (16) de la conduite de fluide (3) présente dans la direction d'ouverture du puits (15) au moins partiellement une surface de délimitation (18) sensiblement plane.

15. Conduite de fluide (3) selon l'une quelconque des revendications 10 à 14, **caractérisée en ce que** le puits (15) s'étend jusque dans l'espace intérieur (16) de la conduite de fluide (3).

16. Ensemble, comprenant un dispositif de chauffage (2) et une conduite de fluide (3), **caractérisée en ce que** la conduite de fluide (3) est formée selon l'une quelconque des revendications 10 à 15.

17. Module de chauffage (1), notamment pour le dégazage du carter d'un moteur à combustion interne, comportant une conduite de fluide (3), un dissipateur thermique et un élément de chauffage (14), **caractérisé en ce que** la conduite de fluide (3) est formée selon l'une quelconque des revendications 10 à 15 et présente un puits s'ouvrant vers l'extérieur dans une direction radiale (15) dans lequel l'élément de chauffage (4) est placé, et **en ce que** le dissipateur thermique est formé comme élément conducteur placé dans la conduite de fluide et est agencé dans la zone du puits.

18. Procédé de fabrication d'un module de chauffage (1), notamment pour le dégazage du carter d'un moteur à combustion interne, comprenant les étapes suivantes :
- placement d'un dispositif de chauffage comportant un élément de chauffage dans un puits d'une conduite de fluide s'ouvrant vers l'extérieur ;
- agencement d'un dissipateur thermique formé comme élément conducteur dans la conduite de fluide dans la zone du puits.

19. Procédé selon la revendication 18, comprenant l'étape de procédé suivante :
- préassemblage d'un élément de chauffage à coefficient positif de température et de plaques de contact en un dispositif de chauffage formé comme unité de module avant le placement de celui-ci dans le puits.
